Europäisches Patentamt

**European Patent Office**

Office européen des brevets

(11) Numéro de publication: **0 217 714**
**B1**

(12) **FASCICULE DE BREVET EUROPEEN**

(45) Date de publication du fascicule du brevet:
**23.11.89**

(51) Int. Cl.⁴: **A01F 15/14**

(21) Numéro de dépôt: **86402102.7**

(22) Date de dépôt: **25.09.86**

(54) Procédé de liage de balles de produits agricoles fibreux et installation pour la mise en oeuvre d'un tel procédé.

(30) Priorité: **26.09.85 FR 8514293**

(43) Date de publication de la demande:
**08.04.87 Bulletin 87/15**

(45) Mention de la délivrance du brevet:
**23.11.89 Bulletin 89/47**

(84) Etats contractants désignés:
**DE FR GB IT NL**

(56) Documents cités:
**EP-A- 0 159 953**
**DE-A- 2 800 800**
**FR-A- 2 366 786**
**FR-A- 2 457 636**
**US-A- 4 174 661**
**US-A- 4 517 890**

(73) Titulaire: **HESSTON S.A., Division Coex, F-85220 - Coex(FR)**

(72) Inventeur: **Renaud, Loïc Marcel, Les Portes Rouges Commequiers, F-85220 Coex(FR)**

(74) Mandataire: **Hasenrader, Hubert et al, Cabinet BEAU DE LOMENIE 55, rue d'Amsterdam, F-75008 Paris(FR)**

ACTORUM AG

## Description

La présente invention concerne un procédé de liage de balles de produits agricoles fibreux réalisées dans une ramasseuse-enrouleuse formant des balles cylindriques à partir d'une récolte de produits agricoles fibreux disposée en andains, procédé du type selon lequel après l'achèvement d'une balle, l'extrémité libre d'une ficelle de liage est projetée vers la périphérie de ladite balle par un distributeur-guide de ficelle et après accrochage à ladite balle, est enroulée en hélice sous tension autour de celle-ci pendant que le distributeur-guide de ficelle se déplace à vitesse constante, rectilinéairement et parallèlement à l'axe de la balle de façon à lier tout le pourtour cylindrique de la balle, avec ladite ficelle qui est découpée à la fin de l'opération de liage dans la zone médiane du pourtour de balle.

Un tel procédé connu par exemple par le brevet FR-A-2 518 363 présente entre autres l'inconvénient de laisser les extrémités de la balle sans liage pendant un temps de rotation non négligeable au cours duquel les extrémités s'effrittent ou s'émiettent et causent à ces endroits un liage relativement lâche et risquent d'entrainer un bourrage de l'installation.

Selon le procédé connu, le liage commence par la partie centrale du pourtour de balle et se dirige ensuite vers une extrémité de balle, puis après renversement du sens de déplacement du distributeur-guide de ficelle vers l'autre extrémité de balle pour finalement revenir vers le point de départ de l'opération. On comprend aisément qu'avec un tel système on laisse une moitié de balle complètement non-liée pendant que l'autre moitié est liée deux fois. En outre, le temps de liage est assez long car pour chaque opération de liage le distributeur-guide de ficelle se déplace nécessairement deux fois le long d'une génératrice de la balle cylindrique.

Pour éliminer ces inconvénients, on a déjà proposé de déposer la ficelle sur le pourtour de la balle à l'aide d'un ou de deux tubes guide-ficelle dont une extrémité est articulée dans l'axe de l'installation, c'est-à-dire dans le prolongement du plan médian de la balle, perpendiculaire à l'axe de celle-ci, et dont l'autre extrémité par laquelle est disposée la ficelle balaye une zone en arc de cercle au-dessus de la balle, et s'étendant d'une extrémité à l'autre du pourtour cylindrique de celle-ci. Dans ce cas, l'opération de liage commence à une extrémité de la balle et s'arrête à l'autre avant la coupe de la ficelle. Lorsque dans ce cas deux tubes guide-ficelle sont utilisés simultanément, ils pivotent en contre-sens de sorte que les deux extrémités de la balle sont ficelées dès le début de l'opération et que l'émiettement des extrémités est évité. Par contre, le temps de liage est encore assez long et les intervalles entre deux tours de ficelle voisins sont irréguliers d'un intervalle à l'autre en raison du mode de déplacement des tubes guide-ficelles en arc de cercle.

La présente invention a pour but de proposer un procédé de liage du type intialement mentionné et permettant d'obtenir rapidement des balles correctement ficelées à des intervalles réguliers.

Ce but est atteint conformément à l'invention du fait que l'on commence le liage simultanément aux deux zones d'extrémités du pourtour de balle d'abord dans la partie intérieure de chaque zone d'extrémité à une distance du bord suffisante pour éviter un émiettement de la balle, puis dans la partie extérieure de ladite zone d'extrémité, et ensuite on procède simultanément au liage des deux moitiés de la balle à partir des deux extrémités en déplaçant à vitesse constante, l'un vers l'autre, deux guides-ficelles et leurs ficelles parallèlement à l'axe de la balle, on arrête le déplacement transversale des deux ficelles parallèlement à l'axe de la balle lorsque les guides-ficelles se sont rapprochés l'un de l'autre en face de la zone médiane de la balle et l'on réalise deux groupes de plusieurs boucles de ficelle circulaires avant de couper chacune des ficelles.

On obtient ainsi une balle correctement ficelée en un temps très court, ce qui diminue les temps d'arrêts successifs de la presse mobile pour fabrication de balles cylindriques.

L'invention a également pour objet une ramasseuse-enrouleuse de balles cylindriques comportant une installation de ficelage de balles cylindriques.

La ramasseuse-enrouleuse à laquelle est associée l'installation de ficelage comporte sur un châssis de support porté par une paire de roues, une chambre de pressage délimitée par un caisson avant fixé rigidement sur le châssis et par une porte arrière montée à pivotement sur le caisson de façon à pouvoir être basculée vers le haut et libérer la sortie d'une balle. A la partie inférieure de la chambre de pressage est prévue une ouverture d'accès s'étendant sur toute la largeur de la ramasseuse-enrouleuse parallèlement l'axe de la balle cylindrique et en-dessous de cette ouverture accès est disposé un dispositif d'alimentation dénommé "pick up" qui ramasse les produits fibreux formant andains et les renvoie à l'intérieur de la chambre de pressage. A l'intérieur de la chambre de pressage sont prévus plusieurs courroies sans fin qui passent par-dessous plusieurs rouleaux de renvoi dont certains sont disposés à poste fixe à la périphérie de la chambre et dont les autres sont montés sur des balanciers et font suivre lesdites courroies la forme grandissante de la balle, un rouleau d'amorçage étant disposé au dessus et à une certaine distance du dispositif d'alimentation et délimitant le bord frontal de l'ouverture d'accès.

L'installation de ficelage est du type comprenant un boîtier de commande disposé à la partie inférieure du caisson fixe de ladite ramasseuse-enrouleuse en avant de l'ouverture d'accès à la chambre de pressage de celle-ci, de façon à s'étendre parallèlement à et sur toute la longueur transversale de cette ouverture, au moins un distributeur guide-ficelle dont l'extrémité de distribution se déplace parallèlement à l'axe de la balle et aux bords longitudinaux de l'ouverture d'accès, des moyens d'entrainement rectiligne du distributeur guide-ficelle, un dispositif d'alimentation de ficelle à partir d'une bobine disposée dans un coffret du caisson fixe et muni d'un certain nombre d'éléments de guidage et de renvoi, ainsi qu'un dispositif de coupe de ficelle en fin d'opération de liage.

Cette installation de ficelage est caractérisée conformément à l'invention du fait qu'elle comprend deux distributeurs guide-ficelle dont chacun est constitué par l'extrémité libre arrière d'un tube-guide qui s'étend perpendiculairement au boitier de commande, est solidaire par son extrémité avant d'un élément des moyens d'entrainement rectiligne prévus dans le boitier de commande et qui est susceptible de se déplacer simultanément avec l'autre tube-guide dans le sens d'un rapprochement des deux tubes-guides en face de la zone médiane de la balle ou dans le sens d'un écartement des deux tubes jusqu'à dans leurs positions extrêmes de stockage dans lesquelles, ils se trouvent à côté des flancs latéraux du caisson fixe, que l'extrémité libre de chaque tube-guide comprend un dispositif de coupe destiné à couper la ficelle de l'autre tube-guide à la sortie de celui-ci et que l'extrémité avant de chaque tube-guide est associé à un dispositif d'avance de ficelle.

Cette conception conduit à une installation de ficelage simple et efficace permettant d'obtenir rapidement des balles cylindriques correctement ficelées.

D'autres avantages et caractéristiques de l'invention ressortiront de la description suivante d'un mode de réalisation, faite seulement à titre d'exemple et en référence au dessins annexés sur lesquels :

La figure 1 représente en coupe longitudinale une vue schématique en élévation d'une ramasseuse-enrouleuse, également connue sous la désignation presse à balles cylindriques ;

la figure 2 est une vue en perspective et partiellement éclatée de l'installation de ficelage ;

la figure 3 est une vue en plan schématique du dispositif d'avance de ficelle.

les figures 4 à 8 sont des vues en plan montrant certains éléments mobiles de l'installation de ficelage en différentes positions de travail et en position de stockage latérale; et

la figure 9 est une vue en plan d'une balle ficelée suivant l'invention.

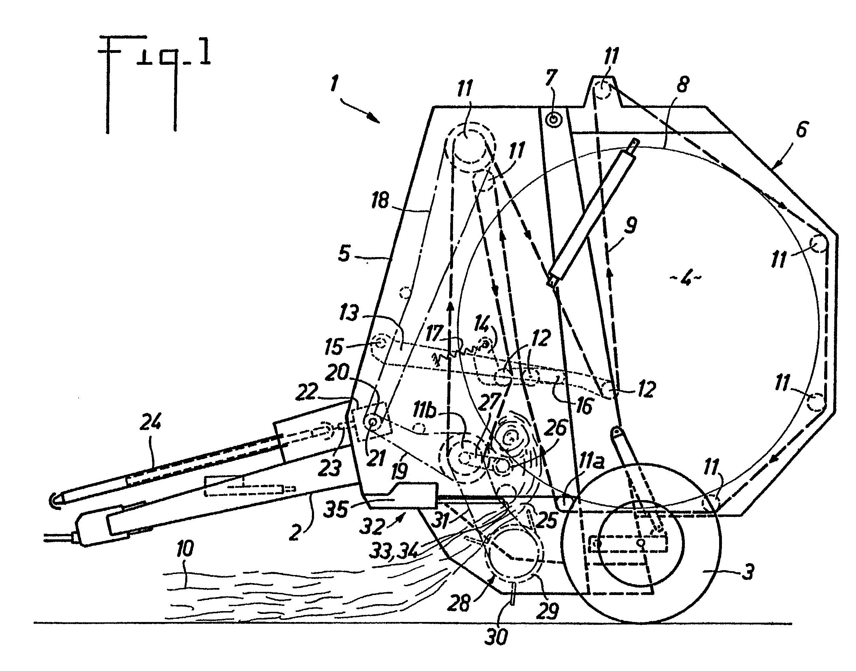

Tel qu'on peut le voir sur la figure 1, la ramasseuse-enrouleuse ou presse à balles cylindriques 1 comporte sur un châssis de support 2 porté par une paire de roues 3, une chambre de pressage 4 délimitée par un caisson avant 5 monté rigidement sur la châssis 2 et par une porte à caisson arrière 6 montée à pivotement par l'intermédiaire d'un axe 7 sur la partie arrière supérieure du caisson avant fixe 5 de façon à pouvoir être basculée vers le haut et à permettre la sortie d'une balle ficelée 8 hors de ladite chambre de pressage 4.

Une série de courroies sans fin 9 juxtaposées et servant à entrainer et à enrouler en continu des couches d'andain 10 des produits de recolte fibreux pour former une balle cylindrique 8 passent autour de plusieurs rouleaux de guidage ou de renvoi fixes 11 et d'une série de rouleaux mobiles en position 12 et montés sur des balanciers 13, 14 articulés eux-mêmes soit (en 15) sur la partie frontale du caisson avant, soit (en 16) sur le premier balancier 13, et rappelés par un ressort 17 contre le premier balancier 13.

Les deux rouleaux fixes avant 11 servent en même temps à la commande des courroies 9 et sont entrainés en rotation par deux transmissions à chaîne 18, 19 en prise sur une roue dentée 20 d'un arbre de sortie 21 d'une boîte de transmission 22 dont l'arbre d'entrée 23 est raccordé par l'intermédiaire d'un arbre téléscopique à cardans 24 à l'arbre de sortie non représenté d'un tracteur.

A la partie inférieure de la chambre de pressage 4 est prévue une ouverture d'accès 25 délimitée par un rouleau inférieur fixe 11a et un rouleau d'amorçage 26 disposé à proximité du rouleau de commande inférieur 11b et entrainé en rotation à partir de celui-ci par l'intermédiaire d'une autre transmission à chaîne 27. Bien entendu, les différentes transmissions sont disposées de façon à ne pas gêner l'amenée des andains 10 à l'ouverture d'accès 25 qui s'étend sur toute la largeur de la ramasseuse-enrouleuse 1 parallèlement à l'axe de la balle 8 et à tous les rouleaux 11 et 12.

En dessous de l'ouverture d'accès est prévu un dispositif d'alimentation 28 de structure habituelle et connu sous la dénomination de "pick-up". Ce dispositif d'alimentation 28 comprend un cylindre mobile en rotation 29 monté sur la partie inférieure du caisson avant 5 et muni d'une série de doigts ramasseurs 30, une transmission à courroie 31 faisant tourner ledit cylindre 29 en sychronisme avec le rouleau inférieur de commande 11b.

L'installation de ficelage 32 comprend deux distributeurs guide-ficelle 33, 34 et est disposée à la partie inférieure du caisson avant 5 de telle sorte que l'extrémité arrière libre desdits distributeurs 33, 34 se situe au-dessus du dispositif d'alimentation 28, en-dessous du rouleau d'amorçage 26 et en avant de l'ouverture d'accès 25.

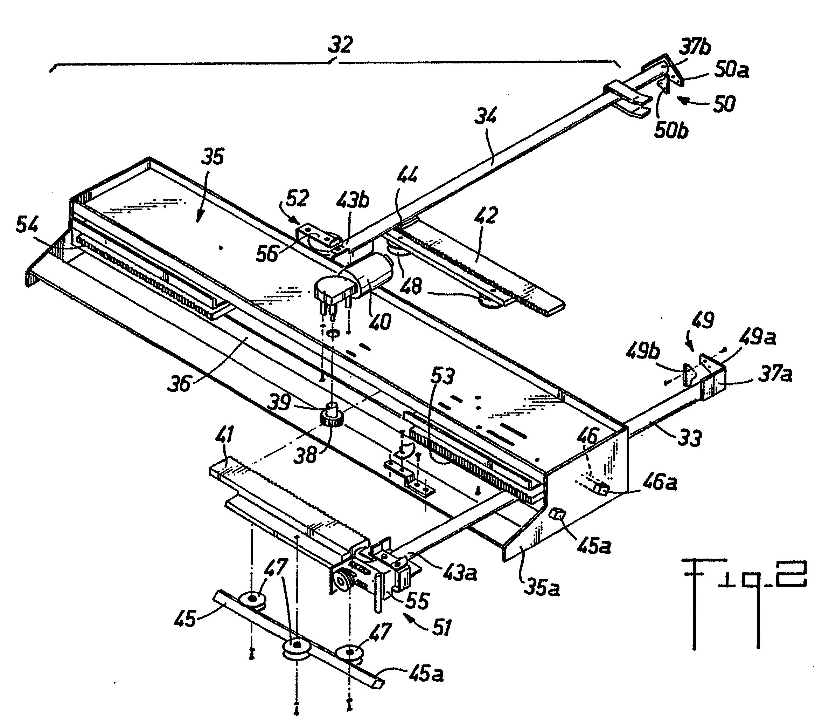

Comme on peut le voir plus particulièrement sur la figure 2, l'installation de ficelage 32 comprend un boîtier de commande 35 disposé transversalement à la partie inférieure du caisson fixe 5 et parallèlement et en avant de l'ouverture d'accès 25 et s'étendant sur toute la largeur de la ramasseuse-enrouleuse 1.

Le boîtier de commande 35 présente sur la face avant et sur la face arrière une fente de passage 36 traversée par les parties extrêmes avant de deux tubes guide-ficelle constituant chacun l'un des deux distributeurs guide-ficelle 33, 34 situés au même niveau juste devant l'ouverture d'accès 25 au-dessus du dispositif d'alimentation 28 et en-dessous du rouleau d'amorçage 26.

Au centre du boîtier 35 est prévue une roue dentée centrale 38 dont l'arbre vertical 39 reçoit son mouvement de rotation par un moteur électrique 40 monté sur ledit boîtier 35. Cette roue dentée centrale 38 coopère avec deux crémaillères transversales mobiles 41, 42 de longueur légérement supérieure à la moitié de la longueur du boîtier 35. Chacune de ces crémaillères mobiles 41, 42 s'étend parallèlement à l'autre et à l'ouverture d'accès 25 et perpendiculairement à chacun des tubes-guides 33, 34. L'extrémité latérale extérieure de chaque crémaillère mobile 41, 42 est fixée soit à l'extrémité avant 43a, 43b de l'un (33) des tubes-guides 33, 34, soit à une partie 44 du tube-guide (34) légèrement en retrait par rapport à l'extrémité avant (par exemple 43b) de celui-ci afin de permettre à ces crémaillères mobiles d'être disposées de part et d'autre de la roue dentée centrale 38 et de se déplacer en sens opposés lors de la rotation de celle-ci.

Afin d'éviter tout gêne d'un tube-guide 33 ou 34 par la crémaillère mobile 42 ou 41 solidaire de l'autre tube-guide 34 ou 33, les deux crémaillères 41, 42 sont décalées en hauteur d'une distance égale au diamètre extérieur des tubes-guides 41, 42 et sont fixées l'une (par exemple 41) sur le dessus de son tube-guide correspondant 33 et l'autre sur le dessous de son tube-guide 34. Chaque crémaillère mobile 41, 42 est guidée le long d'une glissière de guidage 45, 46 par exemple de section carrée et montée à ses deux extrémités 45a, 46a dans les flasques latéraux 35a du boitier 35, à l'aide de trois galets 47 ou 48 dont les axes de rotation sont solidaires de la crémaillère correspondante 41 ou 42 et qui s'appuient soit d'un coté, soit de l'autre de la glissère 45 ou 46.

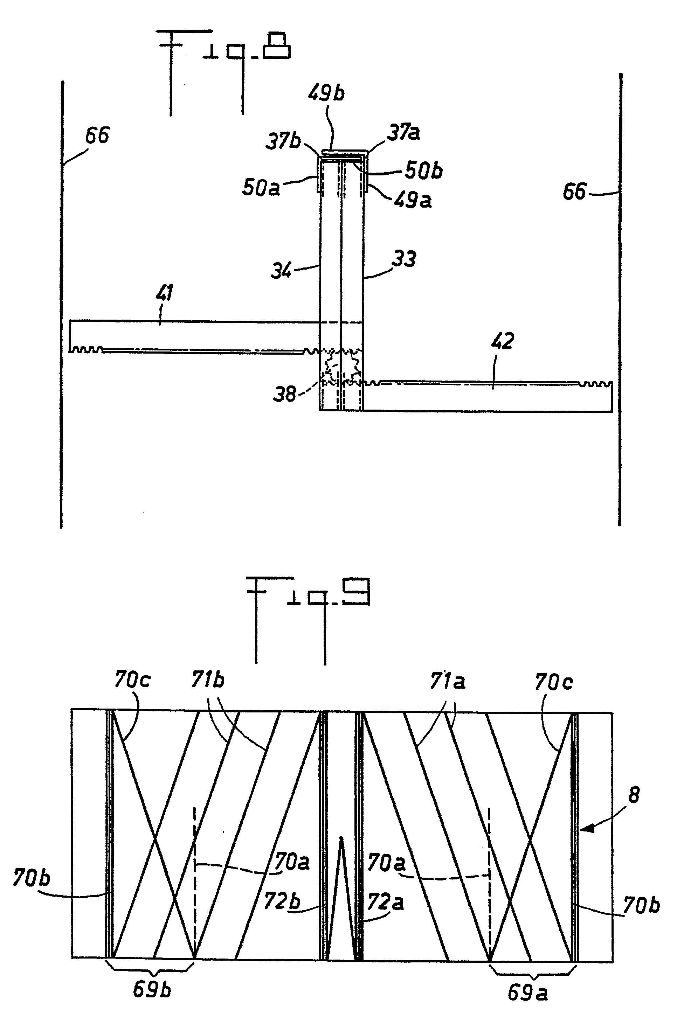

A l'extrémité libre arrière 37a, 37b de chaque tube-guide 33, 34 est prévu un dispositif de coupe 49, 50 comprenant un support de lame 49a, 50a et une lame de coupe 49b, 50b destinée à couper la ficelle sortant de l'extrémité libre 37b, 37a de l'autre tube-guide 34, 33 et fixée par son extrémité extérieure sur le support de lame 49a, 50a de façon que son extrémité intérieure s'étende vers l'extrémité libre 37b ou 37a de l'autre tube-guide 34 ou 33 et passe devant ladite extrémité libre 37b ou 37a lorsque les deux tubes-guides 33, 34 sont en position rapprochée (voir figure 8) ; là encore, les lames de coupe 49b, 50b sont disposées sur les supports de lame 49a, 50a de manière à pouvoir se croiser sans se gêner mutuellement pendant la découpe des ficelles tendues 61, les supports de lame 49a, 50a étant chacun monté rigidement sur l'extrémité libre arrière 37a, 37b du tube-guide correspondant 33 ou 34 sans gêner le passage de la ficelle de liage 61.

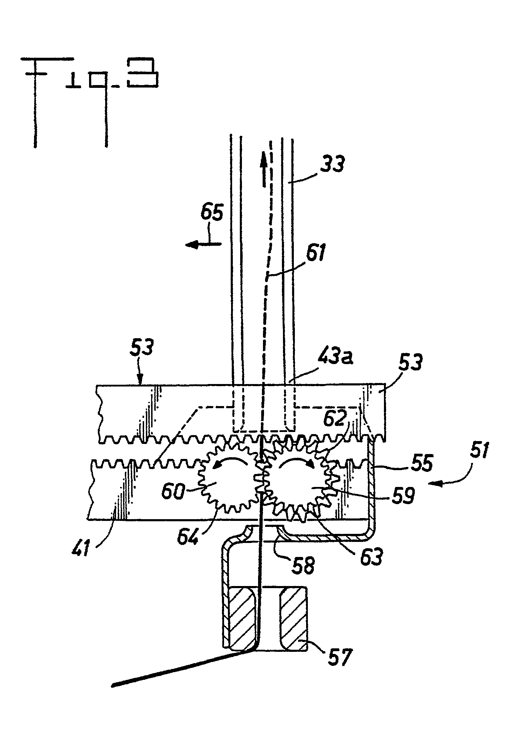

A l'extrémité avant 43a, 43b, chaque tube-guide 33, 34 est associé un dispositif d'avance de ficelle 51, 52 représenté sur les figures 2 et 3. Chaque dispositif d'avance 51, 52, comprend une crémaillère fixe 53, 54 disposée dans le boîtier 35, par exemple, au-dessus du trajet extérieur de l'extrémité avant 43a ou 43b du tube-guide 33 ou 34. Ces crémaillères fixes 53, 54 s'étendent à partir du flasque latéral correspondant 35a vers la partie centrale du boîtier 35 sur une distance ne dépassant pas un quart de la longueur transversale dudit boîtier 35. Le dispositif d'avance 51, 52 comprend aussi devant l'extrémité avant 43a, 43b de chaque tube-guide 33, 34 sur un support 55, 56 solidaire de ladite extrémité correspondante 43a ou 43b, de l'avant vers l'arrière, deux oeillets guide-fil 57, 58 et une paire de rouleaux presseurs 59, 60 entre lesquels est serrée plus ou moins fortement la ficelle 61 qui, venant des deux oeillets guide-fil 57, 58, passe entre les deux rouleaux presseurs 59,60 avant de s'engager dans l'extrémité avant 43a, 43bdu tube-guide correspondant 33 ou 34 et de traverser entièrement celui-ci.

L'un, par exemple 59, des rouleaux presseurs 59, 60 porte une couronne dentée 62 engrenant dans la crémaillère fixe correspondante 53, 54 ainsi qu'une roue dentée 63 solidaire dudit rouleau 59 et coopérant avec une roue dentée 64 solidaire de l'autre rouleau presseur (par exemple 60). La couronne dentée 62 est reliée à la roue dentée coaxiale 63 et au rouleau presseur correspondant 59 (ou 60) par l'intermédiaire d'une mécanisme à roue libre non représenté assurant l'accouplement entre la couronne dentée 62 et le rouleau presseur correspondant 59 seulement lorsque le tube-guide correspondant 33 ou 34 et avec lui les paires de rouleaux presseurs 59, 60, se déplace (suivant la flèche 65) de l'extérieur vers le centre du boîtier 35 et fait ainsi tourner la couronne 62 (dans l'exemple de la figure 3 dans le sens des aiguilles d'une montre) et avancer la ficelle 61 entre les rouleaux presseurs 59, 60 d'une longueur déterminée (par exemple de 30 cm) en direction de l'extrémité libre arrière 37a ou 37b du tube-guide correspondant 33, 34.

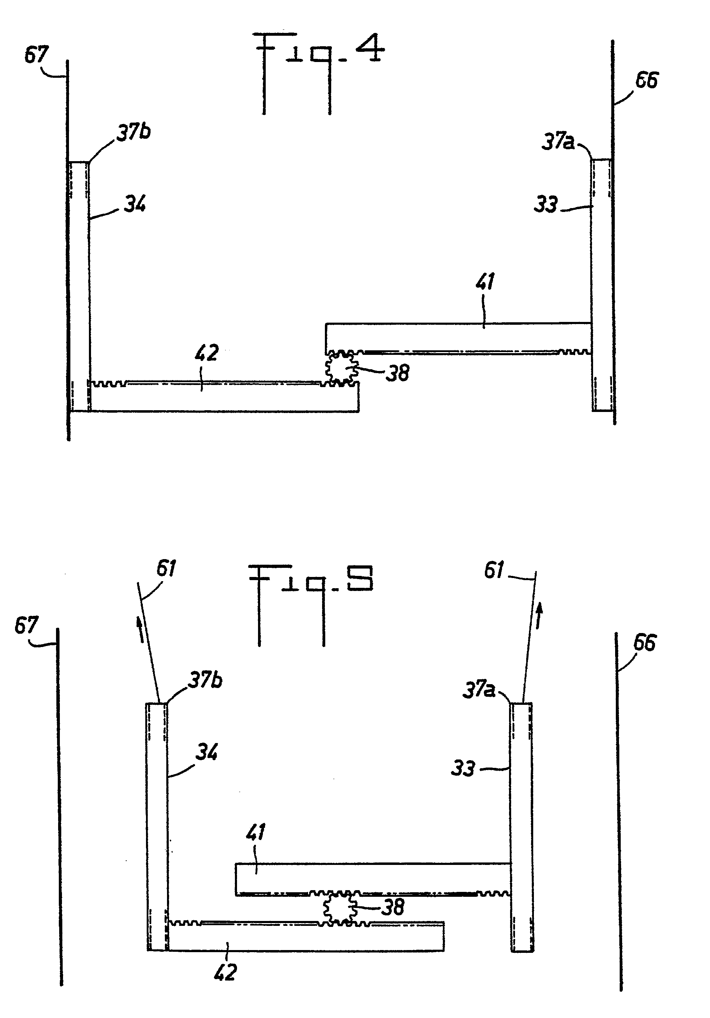

Le mode de fonctionnement de l'installation de ficelage 32 est schématiquement représenté sur les figures 4 à 8 et est comme suit :

Après l'achèvement de l'enroulement de l'andain 10 en une balle 8 d'un diamètre donné, les tubes-guides 33, 34 sont déplacés et rapprochés l'un de l'autre à partir de leur position de stockage à côté des flasques latéraux 66, 67 de la ramasseuse-enrouleuse à l'aide de la roue dentée centrale 38 agissant sur les crémaillères mobiles correspondantes 41, 42, l'extrémité libre de la ficelle 61 ne dépassant pratiquement pas de l'extrémité libre arrière 37a, 37b du tube-guide 33 ou 34 (voir figure 4).

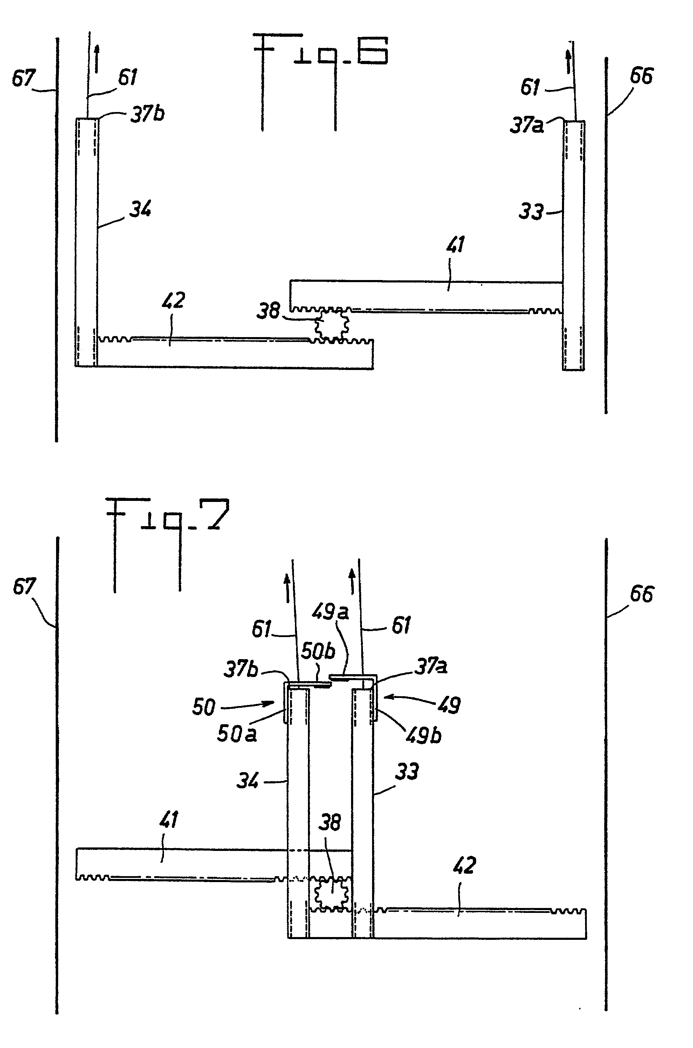

Pendant leur déplacement, les tubes-guides 33, 34 sont amenés chacun à environ 30 cm des flancs latéraux 66, 67 (voir figure 5) qui détermine en même temps les extrémités de la balle 8. Au cours de ce déplacement, la couronne dentée 62 du dispositif d'avance 51, 52 se déroule sur la crémaillère fixe 53 ou 54 et transmet sa rotation au rouleaux presseurs 59, 60 qui font avancer la ficelle 61 de 20 à 30 cm par exemple au delà de l'extrémité libre 37a, 37b du tube-guide 33 ou 34 et l'introduisent dans la chambre de pressage 4 ou sur le dispositif d'alimentation 28 qui la projette dans ladite chambre 4. L'extrémité des deux ficelles 61 est prise par la balle 8 qui tourne dans la chambre 4 sous l'action des courroies 9. Dès que la ficelle 61 est prise et accrochée sur la balle 8, par exemple après un demi tour de balle, on déplace les tubes-guides 33, 34, en direction des flasques latéraux voisins 66, 67 à l'aide de la roue de commande 38 et des crémaillères mobiles 41, 42 et on les arrête à environ 13 à 15 cm desdits flancs pour effectuer simultanément le ficelage des deux extrémités de la balle 8 (position figure 6) à l'aide de quelques tours circulaires de ficelle 66 sur la balle tournante 8, la paire de rouleaux presseurs 59, 60 jouant le rôle d'un frein de fil sous l'effet de traction exercé par la balle tournante 8 sur les deux ficelles 61. On réalise ainsi dans chacune des deux zones d'extrémité 69a, 69b de la balle 8 un liage intérieur 70a et un liage extérieur circulaire 70b de plusieurs tours de ficelle relié au liage intérieur 70a, qui peut être moins d'un tour de ficelle, par un liage intermédiaire hélicoidale 70c.

Aussitôt après, on commande le déplacement rectiligne à vitesse constante mais réglable des deux tube-guides 33, 34 vers la partie centrale du pourtour de la balle 8. Sous l'influence de ce rapprochement des deux tubes-guides 33, 34, les deux ficelles s'enroulent sous tension autour de la balle 8 en forme d'hélice 71a, 71b à pas constants et égaux mais d'inclinaison inverse l'une par rapport à l'autre, en faisant chacune plusieurs tous autour de la balle 8.

On interrompt ce mouvement de rapprochement des tubes-guides 33, 34 lorsqu'ils se trouvent à une distance faible, par exemple de 10 à 20 cm, l'un de l'autre. Là encore, la rotation de la balle 8 continue et on réalise alors avec chacune des ficelles 61 plusieurs tours circulaires 72a, 72b (figure 7).

Après un nombre de tours minimum de ficelage pour assurer un ficelage correct, on rapproche complètement l'un de l'autre les tubes-guides 33, 34 de sorte que la lame 49b ou 50b de l'un (33) ou l'autre (34) des tubes 33, 34 puisse couper la ficelle tendue 61 sortant de l'autre tube-guide 34 ou 33 (figure 8).

Ensuite les deux tubes-guides 33, 34 sont écartés l'un de l'autre et ramenés dans leur position de stockage respective (figure 4) où ils attendent l'opération de ficelage ou liage de la balle suivante.

## Revendications

1. Procédé de liage de balles de produits agricoles fibreux réalisées dans une ramasseuse-enrouleuse formant des balles cylindriques (8) à partir d'une récolte de produits agricoles fibreux disposée en andains (10), procédé du type selon lequel après l'achèvement d'une balle (8), l'extrémité libre d'une ficelle de liage (61) est projetée vers la périphérie de ladite balle (8) par un distributeur-guide de ficelle (33, 34) et après accrochage à ladite balle, est enroulée en hélice sous tension autour de celle-ci pendant que le distributeur-guide de ficelle (33, 34) se déplace à vitesse constante, rectilinéairement et parallèlement à l'axe de la balle (8) de façon à lier tout le pourtour cylindrique de la balle avec ladite ficelle qui est découpée à la fin de l'opération de liage dans la zone médiane du pourtour de balle, caractérisé en ce que l'on commence le liage simultanément aux deux zones d'extrémités du pourtour de balle d'abord dans la partie intérieure (70a) de chaque zone d'extrémité (69a, 69b) à une distance du bord suffisante pour éviter un émiettement de la balle, puis dans la partie extérieure (70b) de ladite zone d'extrémité, et ensuite on procède simultanément au liage des deux moitiés de la balle à partir des deux extrémités en déplaçant à vitesse constante, l'une vers l'autre, deux guides-ficelles (33, 34) et leurs ficelles (61) parallèlement à l'axe de la balle (8) de façon à réaliser simultanément sur la balle (8) deux zones de liage dans lesquelles les deux ficelles (61) s'enroulent sous tension autour de la balle (8) en plusieurs tours et enforme d'hélices (71a, 71b) à pas constants et égaux, mais d'inclinaison inverse l'une par rapport à l'autre, on arrête le déplacement transversal des deux ficelles (61) parallèlement à l'axe de la balle lorsque les guides-ficelles (33, 34) se sont rapprochés l'un de l'autre en face de la zone médiane de la balle (8) et l'on réalise deux groupes (72a, 72b) de plusieurs boucles de ficelle circulaires avant de couper chacune des ficelles (61).

2. Procédé de liage selon la revendication 1, caractérisé en ce que l'on commence le liage de la balle (8) dans la partie intérieure de chaque zone d'extrémité (69a, 69b) à environ 30 cm des extrémités de la balle (8) et on procède ensuite au liage de la partie extérieure desdites zones d'extrémité, à environ 15 cm des extrémités de la balle, en y réalisant plusieurs tours de ficelle circulaires (70b).

3. Ramasseuse-enrouleuse de balles cylindriques comprenant une installation de ficelage (32) du type comportant un boîtier de commande (35) disposé à la partie inférieure du caisson fixe (5) de ladite ramasseuse-enrouleuse (1) en avant de l'ouverture d'accès (25) à la chambre de pressage (4) de celle-ci, de façon à s'étendre parallèlement à et sur toute la longueur transversale de cette ouverture, au moins un distributeur guide-ficelle (33, 34) dont l'extrémité de distribution (37a, 37b) se déplace parallèlement à l'axe de la balle (8) et aux bords longitudinaux de l'ouverture d'accès (25) des moyens d'entraînement rectiligne (38 à 42) du distributeur guide-ficelle (33, 34), un dispositif d'alimentation de ficelle à partir d'une bobine disposée dans un coffret du caisson fixe (5) et muni d'un certain nombre d'éléments de guidage et de renvoi, ainsi qu'un dispositif de coupe de ficelle (49, 50) en fin d'opération de liage, caractérisée en ce que ladite installation comprend deux distributeurs guide-ficelle dont chacun est constitué par l'extrémité libre arrière (37a, 37b) d'un tube-guide (33, 34) qui s'étend perpendiculairement au boîtier de commande (35), est solidaire par son extrémité avant d'un élément (41, 42) des moyens d'entraînement rectiligne (38 à 42) prévus dans le boîtier de commande (35) et qui est susceptible de se déplacer simultanément avec l'autre tube-guide (34, 33) dans le sens d'un rapprochement des deux tubes-guides en face de la zone médiane de la balle (8) ou dans le sens d'un écartement des deux tubes-guides jusqu'à dans leurs positions extrêmes de stockage (figure 4) dans lesquelles ils se trouvent à côté des flancs latéraux (66, 67) du caisson fixe (5), que l'extrémité libre (37a, 37b) de chaque tube-guide (33, 34) comprend un dispositif de coupe (49, 50) destiné à couper la ficelle (61) de l'autre tube-guide (34, 33) à la sortie de celui-ci et que l'extrémité avant (43a, 43b) de chaque tube-guide (33, 34) est associé à un dispositif d'avance de ficelle (51, 52).

4. Ramasseuse-enrouleuse selon la revendication 3, caractérisée en ce que les moyens d'entraînement rectiligne des deux tubes-guides (33, 34) comprennent deux crémaillères mobiles (41, 42) dont chacune s'étend et est guidée parallèlement à l'ouverture d'accès (25) dans la chambre de pressage (4) de la rammasseuse-enrouleuse, est d'une longueur légèrement supérieure à la moitié de la longueur du boîtier (35), porte à son extrémité latérale extérieure l'extrémité avant (43a ou 43b) du tube-guide correspondant (33 ou 34), et coopère avec la même roue dentée centrale (38) du boîtier (35) de façon à se déplacer en sens opposé à celui de l'autre crémaillère mobile lors de la rotation de ladite roue dentée centrale.

5. Ramasseuse-enrouleuse selon l'une des revendications 3 et 4, caractérisée en ce que chaque dispositif de coupe (49, 50) comprend une lame de coupe (49b, 50b) fixée, par son extrémité extérieure, sur un support de lame (49a, 50a) lui-même monté rigidement sur l'extrémité libre arrière (37a, 37b) du tube-guide correspondant (33 ou 34), et s'étendant par son extrémité intérieure, en direction de l'extrémité libre arrière (37b, 37a) de l'autre tube-guide (34 ou 33) et passant devant ladite extrémité libre (37b ou 37a) lorsque les deux tubes-guides (33, 34) sont en position rapprochée (figure 8).

6. Ramasseuse-enrouleuse selon l'une des revendications 3 à 5, caractérisée en ce que chaque dispositif d'avance de ficelle (51, 52) comprend une crémaillère fixe disposée dans le boîtier (35) ainsi que sur un support (55, 56) solidaire de l'extrémité avant 43a, 43b) du tube-guide (33, 34), de l'avant vers l'arrière, au moins un guide-fil (57, 58) et une paire de rouleaux presseurs (59, 60) entre lesquels est serrée la ficelle (61), l'un (59) de ces rouleaux portant une couronne dentée (62) engrenant dans la crémaillère fixe correspondante (53 ou 54) et reliée audit rouleau (59) par l'intermédiaire d'un mécanisme à roue libre assurant l'accouplement entre ladite couronne (62) et le rouleau presseur correspondant (59) seulement lorsque le tube-guide correspondant (33 ou 34) se déplace de l'extérieur vers le centre du boîtier.

**Claims**

1. Method for wrapping bales of fibrous crop materials produced in a pick-up baler inside which cylindrical bales (8) are formed from windrowed fibrous crop materials (10), method of the type in which, when a bale (8) is formed, the free end of a binding twine (61) is projected onto the periphery of the bale (8) by means of a twine feeding and guiding device (33, 34), and the twine, being then hooked onto the bale, is helically wound under tension around said bale while the twine feeding and guiding device (33, 34) moves at constant speed in a straight line and parallel to the axis of the bale (8) so as to wrap the whole cylindrical periphery of the bale with said twine, which latter is cut at the end of the wrapping operation in the median zone of the bale periphery, characterized in that the wrapping is simultaneously started in the two end zones of the bale periphery, first on the inside (70a) of each end zone (69a, 69b) at sufficient distance from the edge to prevent crumbling of the bale, and then on the outside (70b) of said end zone, then the two halves of the bale are simultaneously wrapped, starting from the ends, by moving the two twine-guides (33, 34) and their twines (61), at constant speed, one towards the other and in parallel to the axis of the bale (8), thus producing simultaneously on the bale (8) two wrapping zones in which the two twines (61) are wound under tension several times around the bale (8) in helical form (71a, 71b) at constant and equal pitches, but of reverse inclination with respect to one another, the transversal displacement of the two twines (61) parallel to the axis of the bale (8) being stopped when the twineguides (33, 34) have moved towards each other opposite the median zone of the bale (8), and two sets (72a, 72b) of several circular windings of twine are made before the twines (61) are cut.

2. Wrapping method according to claim 1, characterized in that the wrapping of the bale (8) begins on the inside of each end zone (69a, 69b) at about 30 cm from the ends of the bale (8), followed by wrapping of the external part of said end zones, at about 15 cm of the ends of the bale, by making thereon several circular windings (70b) of twine.

3. Pick-up baler for rolling cylindrical bales comprising a wrapping installation (32) of the type having a control box (35) situated at the lower part of the fixed housing (5) of said pick-up baler (1) before the opening (25) giving access to the pressing chamber (4) thereof, in such a way as to extend parallel to and over the whole transversal length of said opening, at least one twine-feeding and guiding device (33, 34), the feeding end (37a, 37b) of which moves in parallel to the axis of the bale (8) and to the longitudinal edges of the access opening (25), means (38 to 42) for moving the twine-feeding and guiding device (33, 34) in a straight path, means for feeding twine from a reel situated in a case provided on the fixed housing (5) and equipped with a certain number of guide and return elements, as well as means for cutting the twine (49, 50) at the end of the wrapping operation, characterized in that said installation comprises two twine-feeding and guiding devices, each one of which is constituted by the free back end (37a, 37b) of a guide-tube (33, 34) which extends perpendicularly to the control box (35), is fast by its front end with one element (41, 42) of the straight moving means (38 to 42) provided in the control box (35), and which is adapted to move simultaneously with the other guide-tube (34, 33), the two guide-tubes moving either one towards the other until they meet in their median part of the bale (8), or apart to return to their outermost storing position (Figure 4) next to the side walls (66, 67) of the fixed housing (5), the free end (37a, 37b) of each guide-tube (33, 34) comprising a cutting device (49, 50) for cutting the twine (61) of the other guide-tube (34, 33) at the outlet therefrom and the front end (43a, 43b) of each guide-tube (33, 34) being operationally coupled to a twine-feeding device (51, 52).

4. Pick-up baler according to claim 3, characterized in that the means used for moving the two guide-tubes (33, 34) in a straight line comprise two movable racks (41, 42), each one of which extends and is guided parallel to the opening (25) giving access into the pressing chamber (4) of the pick-up baler, has a length slightly greater than that of the box (35), supports, at its external lateral front end (43a or 43b) of the corresponding guide-tube (33 or 34), and cooperates with the same central toothed wheel (38) of the box (35) so as to move in the opposite direction to that followed by the other movable rack during the rotation of said central toothed wheel.

5. Pick-up baler according to one of claims 3 and 4, characterized in that each cutting device (49, 50) comprises a cutting blade (49b, 50b) which is fixed by its external end on a blade support (49a, 50b) which is rigidly mounted on the free rear end (37a, 37b) of the corresponding guide-tube (33, 34), and extends by its internal end towards the free rear end (37b, 37a) of the other guide-tube (34 or 33), and passes in front of said free end (37a, 37b) when the two guide-tubes (33, 34) are in close-together position (figure 8).

6. Pick-up baler according to one of claims 3 to 5, characterized in that each twine feeding device (51, 52) comprises a fixed rack placed inside the box (35) as well as on a support (55, 56) integral with the front end (43a, 43b) of the guide-tube (33, 34), from the front towards the back, at least one twine-guide (57, 58) and a pair of pressing rollers (59, 60) between which the twine (61) is gripped, one (59) of said rollers bearing a crown wheel which meshes with the corresponding fixed rack (53 or 54) and is joined to said roller (59) via a free wheel mechanism ensuring the connection between said crown (62) and the corresponding pressing roller (59) only when the corresponding guide-tube (33 or 34) moves from the outside towards the center of the box.

**Patentansprüche**

1. Verfahren zum Binden von Ballen landwirtschaftlicher fasriger Produkte, welche in einer Raff- und Wickelvorrichtung hergestellt sind, die, ausgehend von einem Schnitt in Schwaden (10) angeordneter fasriger landwirtschaftlicher Ernteprodukte zylindrische Ballen (8) bildet, bei welchem nach Fertigstellung eines Ballens (8) das freie Ende einer Bindschnur (61) durch eine Schnurverteil-und Führungseinrichtung (33, 34) in Richtung auf den Umfang des genannten Ballens (8) geworfen und nach Einfangen des Ballens unter Spannung um diesen spiralförmig herumgewickelt wird, während die Schnurverteil- .und Führungseinrichtung (33, 34) sich mit konstanter Geschwindigkeit geradlinig und parallel zur Achse des Ballens (8) bewegt, um den gesamten zylindrischen Außenumfang des Ballens mit der genannten Schnur einzubinden, die nach Beendigung des Bindvorgangs im Mittelbereich des Außenumfangs des Ballens abgetrennt wird, dadurch gekennzeichnet, daß mit dem Binden gleichzeitig an beiden Endbereichen des Außenumfangs des Ballens begonnen wird, und zwar zunächst im Innenbereich (70a) eines jeden Endbereichs (69a, 69b) in genügend großem Abstand vom Rand, um ein Abbröckeln von dem Ballen zu vermeiden, dann im äußeren Teil (70b) des genannten Endbereichs, und sodann gleichzeitig mit dem Binden der beiden Ballenhälften von den beiden Enden ausgehend unter Verschiebung zweier Schnurführungseinrichtungen (61) gegeneinander bei konstanter Geschwindigkeit und ihrer Schnüre (61) parallel zur Achse des Ballens (8), um auf dem Ballen (8) gleichzeitig zwei Bindebereiche zu schaffen, in welchen die beiden Schnüre (61) sich unter Spannung in mehreren Windungen sowie in Form vonSpiralen (71a, 71b) mit konstanter und gleichmäßiger Steigung, jedoch mit entgegengesetzter Neigung in bezug aufeinander, um den Ballen (8) herumlegen, die seitliche Bewegung der beiden Schnüre (61) parallel zur Ballenachse angehalten wird, sobald die Schnurführungseinrichtungen (33, 34) sich vor dem Mittelteil des Ballens (8) nebeneinander befinden, und daß vor dem Abtrennen jeder der Schnüre (61) zwei Gruppen (72a, 72b) mehrerer kreisförmiger Schnurschlaufen gebildet werden.

2. Verfahren nach Anspruch 1, dadurch gekennzeichnet, daß mit dem Binden des Ballens (8) im inneren Teil eines jeden Endbereichs (69a, 69b) in etwa 30 cm Abstand von den Enden des Ballens (8), und anschließend mit dem Binden des äußeren Teils der genannten Endbereiche in etwa 15 cm Abstand von den Ballenenden unter Bildung mehrerer kreisförmiger Schnurschlaufen (70b) begonnen wird.

3. Vorrichtung zum Raffen und Wickeln zylindrischer Ballen, mit einer Umschnürungseinrichtung (32) umfassend ein Steuergehäuse (35) im unteren Teil des festen Gehäuses (5) der genannten Raff- und Wickeleinrichtung (1) vor der Zugangsöffnung (25) zu deren Druckkammer (4), welches sich parallel und über die gesamte transversale Länge der genannten Öffnung erstreckt, mindestens eine Schnurverteil- und Führungseinrichtung (33, 34), deren Verteilende (37a, 37b) parallel zur Achse des Ballens (8) und zu den Längskanten der Zugangsöffnungen (25) der Einrichtungen (38 bis 42) für die geradlinige Mitnahme der Schnur Verteil- und Führungseinrichtung (33, 34), bewegbar ist, einer Einrichtung für die Schnurzulieferung von einer Spule, welche in einem Kasten des festen Gehäuses (5) angeordnet und mit einer bestimmten Anzahl von Führungs- und Richtungsumkehrelementen versehen ist, und mit einer Einrichtung zum Abtrennen der Schnur (49, 50) nach Beendigung des Bindevorgangs, dadurch gekennzeichnet, daß die genannte Einrichtung zwei Schnurverteil- und Führungseinrichtungen aufweist, von denen jede am freien hinteren Ende (37a, 37b) aus einem Führungsrohr (33, 34) besteht, welches sich senkrecht zu dem Steuergehäuse (35) erstreckt, mit seinem vorderen Ende mit einem Element (41, 42) der in dem Steuergehäuse (35) vorgesehenen Einrichtungen für die geradlinige Mitnahme (38 bis 42) verbunden und gleichzeitig mit dem anderen Führungsrohr (34, 33) in Richtung auf eine Annäherung der beiden Führungsrohre gegenüber dem Mittelbereich des Ballens (8) oder in Richtung auf eine Beabstandung der beiden Rohre bis in die Endstellungen ihrer eingefahrenen Position (Fig. 4) bewegbar sind, in denen sie sich neben den Seitenflanken (66, 67) des festen Gehäuses (5) befinden, daß das freie Ende (37a, 37b) jedes Führungsrohres (33, 34) eine Abtrenneinrichtung (49, 50) zum Abtrennen der Schnur (61) des anderen Führungsrohrs (34, 33) an dessen Ausgang aufweist, und daß das Vorderende (43a, 43b) jedes Führungsrohrs (33, 34) einer Schnurzustelleinrichtung (51, 52) zugeordnet ist.

4. Raff- und Wickeleinrichtung nach Anspruch 3, dadurch gekennzeichnet, daß die Einrichtungen für die geradlinige Mitnahme der beiden Führungsrohre (33, 34) zwei bewegliche Zahnstangen (41, 42) umfassen, die sich jeweils parallel zur Zugangsöffnung (25) zur Druckkammer (4) der Raff- und Wickeleinrichtung erstrecken und geführt werden, jeweils eine Länge aufweisen, die etwas über die Hälfte der Länge des Gehäuses (35) beträgt, an ihrem äußeren seitlichen Ende das Vorderende (43a bzw. 43b) des entsprechenden Führungsrohrs (33 bzw. 34) tragen und mit demselben mittigen Zahnrad (38) des Gehäuses (35) dergestalt zusammenwirken, daß sich die eine Zahnstange in entgegengesetzter Richtung zu der anderen beweglichen Zahnstange bei Umlaufen des genannten mittigen Zahnrads bewegt.

5. Raff- und Wickeleinrichtung nach einem der Ansprüche 3 und 4, dadurch gekennzeichnet, daß jede Abtrenneinrichtung (49, 50) eine Schneide (49b, 50b) aufweist, welche mit ihren äußeren Ende an einer Schneidenhalterung (49a, 50a) befestigt ist, welche ihrerseits fest an dem freien hinteren Ende (37a, 37b) des entsprechenden Führungsrohres (33 bzw. 34) befestigt ist und sich mit ihrem inneren Ende in Richtung auf das freie hintere Ende (37b, 37a) des anderen Führungsrohrs (34 bzw. 33) erstreckt und vor dem genannten freien Ende (37b bzw. 37a) verläuft, wenn die beiden Führungsrohre (33, 34) sich in genäherter Stellung befinden (Fig. 8).

6. Raff- und Wickelvorrichtung nach einem der Ansprüche 3 bis 5, dadurch gekennzeichnet, daß jede Schnurzustelleinrichtung (51, 52) eine feste Zahnstange umfaßt, welche sowohl im Gehäuse (35) als auch auf einer Halterung (55, 56) angeordnet ist, die mit dem Vorderende (43a, 43b) des Führungsrohres (33, 34) von vorne nach rückwärts verbunden ist, mindestens eine Führungseinrichtung (57, 58) sowie ein Paar Druckwalzen (59, 60), zwischen welche die Schnur (61) eingespannt ist, wobei eine der beiden Walzen einen Zahnkranz (62) trägt, welcher in die entsprechende feste Zahnstange (53 bzw. 54) eingreift und mit der genannten Walze (59) über einen Freilaufmechanismus verbunden ist, welcher die Kupplung zwischen dem Zahnkranz (62) und der entsprechenden Druckwalze (59) nur dann ermöglicht, wenn das entsprechende Führungsrohr (33 bzw. 34) sich vom Gehäuseäußeren in Richtung auf dessen Mitte bewegt.

Fig.1

EP 0 217 714 B1

EP 0 217 714 B1

Fig.2

Fig.3

Fig.4

Fig.5

Fig.6

Fig.7

Fig.8

Fig.9